(19) Europäisches Patentamt
European Patent Office
Office européen des brevets

(11) **EP 2 690 554 A2**

(12) **EUROPEAN PATENT APPLICATION**

(43) Date of publication:
**29.01.2014 Bulletin 2014/05**

(51) Int Cl.:
**G06F 9/50** (2006.01)

(21) Application number: **12192185.2**

(22) Date of filing: **12.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.07.2012 US 201261675427 P**

(71) Applicant: **Telefonaktiebolaget L M Ericsson AB (Publ)**
**164 83 Stockholm (SE)**

(72) Inventors:
• **Handurukande, Sidath**
  **Athlone (IE)**
• **Wang, MingXue**
  **Athlone (IE)**

(74) Representative: **Stasiewski, Piotr Grzegorz**
**Ericsson Limited**
**Patent Unit Optical Networks**
**Unit 4 Midleton Gate**
**Guildford Business Park**
**Guildford,**
**Surrey GU2 8SG (GB)**

(54) **A method of operating a system for processing data and a system therefor**

(57) The system comprises a plurality of processing nodes. A selected plurality of the plurality of processing nodes perform at least one function. The system is operated to process data by: (a) dividing (103, 1007) input data into a plurality of data chunks; (b) processing (105) each of the plurality of data chunks, concurrently, according to one of the at least one function; (c) aggregating (107, 1015) the processed data chunks into a data set.

Figure 1

EP 2 690 554 A2

## Description

## Technical Field

The present invention relates to a method of operating a system for processing data and a system for processing data in which data can be processed concurrently. In particular, but not exclusively, it relates to a method of operating a system and a system for processing statistical data concurrently in distributed parallel executions.

## Background

With fast 3G and 4G mobile networks and smart phones becoming more widely available, analytics capabilities of operations support systems (OSS) that monitor and analysis network performance for mobile operators are facing challenges with respect to scalability caused by the ever-increasing volume of data traffic. Complex statistical algorithms, such as Support Vector Machine (SVM) are utilized to carry out the analytics of such OSS and these algorithms are required to process increasingly large volumes of data quickly.

Existing analytic systems utilize different types of software or frameworks depending on the requirements of the analytics applications. One such is based on data management system (DMS) focusing on storing and querying data which can only be used for simple analysis. Another such is based on statistical software containing more sophisticated statistical algorithms which includes classification, regression, for example, for advanced analysis.

However such, traditional statistical software, such as R, Weka is not distributed and not scalable. It provides comprehensive statistical algorithms, for machine learning and data mining. R is a known programming language and software environment widely used for statistical computing and advanced data analysis, such as classification, clustering, regression, etc, providing, for example, massive specialized machine learning, data-mining statistical algorithms. Traditional statistical software, such as R, Weka, only run on a single computer, are facing scalability problems with the growing amounts of data that they are required to process.

A known technique to provide a more scalable system is to make use of existing distributed parallel computing models, such as Reduce Map, as mentioned in, J. Dean and S. Ghemawat, "Mapreduce: Simplified data processing on large clusters," Communications of the ACM, vol. 51, no. 1, pp. 107-113, 2008. Such a computing model allows processing nodes to be added to the system, so that large workloads can be divided among differing number of processing nodes to provide scalability. Research in data management system has made significant advances in past few years. For example, Hadoop is developed based on MapReduce to offer a distributed file system and a MapReduce programming framework for data-intensive applications. Frameworks on the top of Hadoop, such as Pig, Hive, provide high level languages for data querying and simple processing with GROUP, ORDER BY, etc., operators in parallel execution. These languages are similar as Structured Query Language (SQL) to traditional Relational Database Management System (RDBMS), give a data access interface for top layer applications to apply business logic. However such distributed systems do not provide statistical algorithms for advanced data analysis.

Current work to integrate traditional statistical software with large scale data management and parallel processing software, such as *RHadoop* is underway. Available from: https://github.com/RevolutionAnalytics/RHadoop/wiki/; Chine, K., Open Science in the Cloud: Towards a Universal Platform for Scientific and Statistical Computing, in Handbook of Cloud Computing, B. Furht and A. Escalante, Editors. 2010, Springer. p. 453-474]; Das, S., et al. Ricardo: Integrating R and Hadoop. in ACM SIGMOD International conference on Management of data 2010; Rickert, J., Big Data Analysis with Revolution R Enterprise (white paper). Revolution Analytics, 2011 attempt to address this problem, but they are either non parallel with respect to data processing, or have difficulties with respect to algorithm developments. For example Guha, S., Computing environment for the statistical analysis of large and complex data (PhD thesis), 2010, Purdue University, users are required to manually design key-value pairs based on Map and Reduce functions in the R program, which is a very difficult task and is inefficient for algorithm development. It becomes a significant problem for algorithm developers, when a statistical and analytical workflow has multiple Map and Reduce functions.

Since all data used in R calculations such as lists, data frames are needed to be loaded into memory, coaching of a single computer only has a very limited memory size that restricts large data sets. RevoScaleR Rickert, J., Big Data Analysis with Revolution R Enterprise (white paper). Revolution Analytics, 20117 is a R package which allows R to use hard disk as external memory for calculations. This approach allows R to handle data size much bigger than its memory size on a single computer, since the size of hard disk generally much larger than memory size of a computer. However, although this solution provides scalability of the processing memory, the processing of the analysis is still limited to a single computer and therefore the processing is slow.

Terabyte level big data storage generally is made available in distributed file systems, such as Hadoop clusters. To enable R to process data in these large scale data warehouses, an interface between these warehouses and R has been developed, such as Ricardo Das, S., et al. Ricardo: Integrating R and Hadoop. in ACM SIGMOD International conference on Management of data 2010. Comparing with R bridging work *RJDBC,* available from: http://www.rforge.net/RJDBC/index.html; *RODBC,* available from: http://cran.r-project.org/web/packages/RODBC/index.html; and *ROracle,* available from: http://cran.r-project.org/web/packages/ROracle/index.html with traditional database, SQL is replaced by a query language with MapReduce capability for data in Hadoop cluster, such as Jaql *Jaql.* Available from: http://code.google.com/p/jaql/ in the Ricardo framework. Therefore, R can directly read data from and save data to the Hadoop Distributed File System (HDFS) by a set of R commands offered from the Ricardo R package. However, even though the read and save data operations from R can be parallelized in different working node by leveraging MapReduce capability of Jaql in Ricardo, the core algorithm executions in R for data processing, such as EMA, are still in a single worker node. To scale out data processing in R, both RHIPE and RHadoop Guha, S., Computing environment for the statistical analysis of large and complex data (PhD thesis), 2010, Purdue University and RHadoop, available from: https://github.com/RevolutionAnalytics/RHadoop/wiki/ extend R to allow writing Map and Reduce functions within R programs. The MapReduce jobs of R can be submitted to Hadoop cluster for parallel executions. However, designing and developing map and reduce functions are very complex. Mahout (*Apache Mahout*) available from: http://mahout.apache.org/) contains a number of machine learning algorithm implemented in MapReduce model which attempts to provide in a parallel processing environment. However, due to the large amounts of algorithms and the complexity of these statistical algorithms, redesign and redevelopment of these algorithms in the MapReduce model has proven to be difficult. Further, Mahout does not provide the algorithms that SVM provides in data mining. Secondly, it does not provide a high level language, such as R and Pig; instead complex Java APIs are provided. As a result, developing analysis jobs in Mahout is complex and difficult.

It results in significant complexity with a large amount of Java code being required, even for defining a simple data analysis task. IBM SystemML project Ghoting, A., et al.

*SystemML: Declarative Machine Learning on MapReduce.* in *IEEE International*

*Conference on Data Engineering.* 2011 proposes a new declarative machine learning Language (DML) for machine learning on MapReduce. However, DML does not provide flexibility of R language. It does not support object oriented features, advanced data types (such, as lists and arrays), etc compared with R. More importantly, SystemML is similar as Mahout in that it lacks commonly used statistical algorithms.

Many approaches utilize non MapReduce based parallel frameworks, such as Open Message Passing Interface (open MPI) *http://www.open-mpi.org/.* R Packages; Rmpi *http://www.stats.uwo.ca/faculty/yu/Rmpi/.*; and snow *http://cran.r-project.org/web/packages/snow/index.html* provide bridge interfaces between R and MPI. cloudrmpi *http://norbl.com/cloudrmpi/cloudRmpi.html* supports to manage an Elastic Computer Cloud (EC2) cluster and access an R session on the master MPI node. Elastic-R K. Chine, "Open science in the cloud: Towards a universal platform for scientific and statistical computing," in Hand-book of Cloud Computing, B. Furht and A. Escalante, Eds. Springer, 2010, ch. 19, pp. 453-474 allows users to send data to any R engine in an R engine pool. However, above solutions do not support parallel data read/write as Hadoop, hence it is not suitable for IO intensive scenarios. Furthermore, these solutions are very difficult to use as users have to code send/receive message functions for master and slave nodes through complex MPI API.

## Summary

The present invention seeks to obviate at least some of the disadvantages of the prior art systems and provide an improved method for operating a system for processing data comprising a plurality of processing nodes and a system therefore.

This is achieved, according to one aspect of the present invention, by a method of operating a system for processing data, the system comprising a plurality of processing nodes, a selected plurality of the plurality of processing nodes performing at least one function, the method comprising the step of: dividing input data into a plurality of data chunks; processing each of the plurality of data chunks, concurrently, according to one of the at least one function; aggregating the processed data chunks into a data set.

This is also achieved, according to another aspect of the present invention, by a system for processing data, the system comprising a plurality of processing nodes, a selected plurality of the plurality of processing nodes performing at least one function, the system further comprising: an input stage for dividing input data into a plurality of data chunks; a processing stage for processing each of the plurality of data chunks, concurrently, according to one of the at least one function; a reduction stage for aggregating the processed data chunks into a data set.

This enables functions (e.g. statistical analysis) to be integrated into a parallel data processing system so that scalability of statistical computing can be achieved. The result is a simple system which allows fast development of machine learning and data mining. The automation of the distribution of the functions can be easily achieved with ease of adding functions to increase complexity of the analyses without increasing complexity of the system. The integrated framework itself automatically handles low level operations, such as the data transformations, tasks failures of analysis jobs in parallel executions.

## Brief Description of the Drawings

For a more complete understanding of the present invention, reference is now made to the following description taken in conjunction with the accompanying drawings in which:

Figure 1 is a flowchart of a method of processing data according to an embodiment of the present invention;

Figure 2 is a simplified schematic of the system for processing data according to an embodiment of the present invention;

Figure 3 is a more detailed schematic of the system of figure 2;

Figure 4 is a more detailed schematic of the processing and reduction stages of the system of figure 2;

Figure 5 is a more detailed schematic of the interpretation module and execution bridge module of system according to an embodiment of the present invention;

Figure 6 is an illustration of the data transformation according to an embodiment of the present invention;

Figure 7 is a simplified schematic of the framework of a Hadoop cluster according to an embodiment of the present invention;

Figure 8 is a more detailed flowchart of the method of processing data according to an embodiment of the present invention;

Figure 9a is an example of experimental results regarding scalability of a system implementing a standard processing technique; and

Figure 9b is an example of experimental results regarding scalability of a system according to an embodiment of the present invention.

## Detailed Description

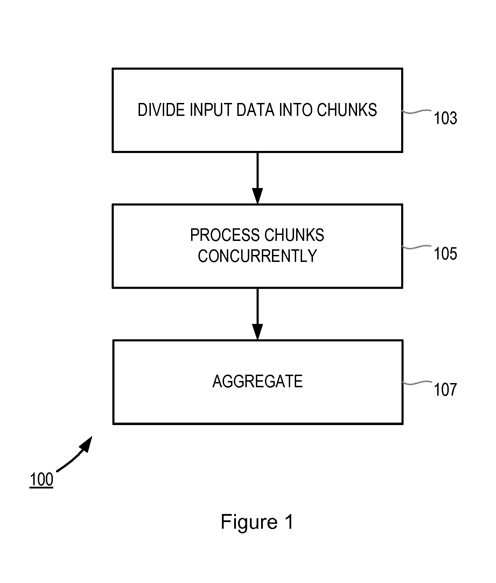

As shown in figure 1, a method 100 of operating a system for processing data in which the system comprises a plurality of processing nodes, a selected plurality of the plurality of processing nodes performing at least one function, comprises dividing 103 input data into a plurality of data chunks; processing 105 each of the plurality of data chunks, concurrently, according to one of the at least one function; and aggregating 107 the processed data chunks into a data set. The steps 103, 105, 107 may be repeated one or more times (not shown in Figure 1) to achieve the final result.

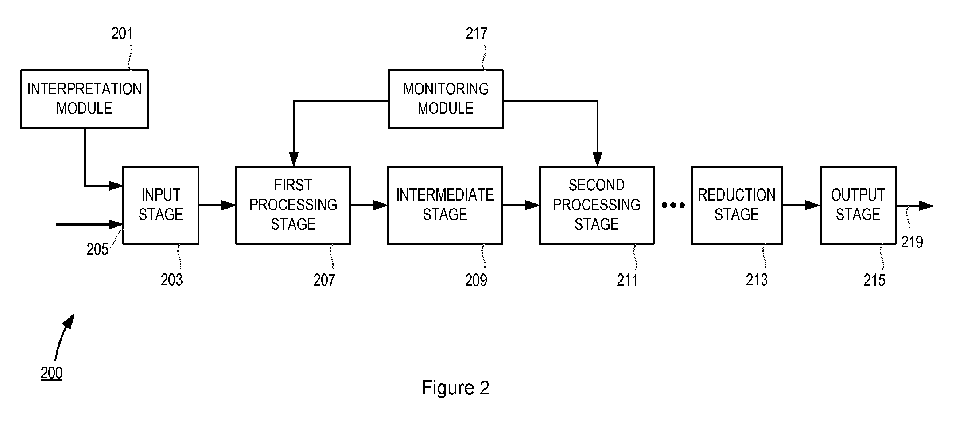

As shown in figure 2, the system 200 comprises a first processing stage 207 and, optionally, at least one second processing stage 211. The first and second processing stages 207, 211 comprise a plurality of processing nodes which may be in a cluster environment. Between the output of the first processing 207 and the input of the second processing stage 211, there is provided an intermediate stage 209. Although a single second processing stage is illustrated in figure 2, it can be appreciated that a multiple number of second processing stages may be incorporated with a corresponding intermediate stages 209 therebetween. Further, it can be appreciated that the apparatus may comprise a first processing stage only depending on the requirement of the analysis to be performed.

The system 200 further comprises an input stage 203 having an input terminal 205 for receiving input data. The input stage 203 is also connected to an interpretation module 201. The first processing stage 207 and any second processing stages 211 are connected to a monitoring module 217. The output of the last second processing stage 211 (or in the alternative embodiment having a single processing stage, the output of the first processing stage 207) is connected to a reduction stage 213. The output of the reduction stage 213 is connected to an output stage 215 which has an output terminal 219.

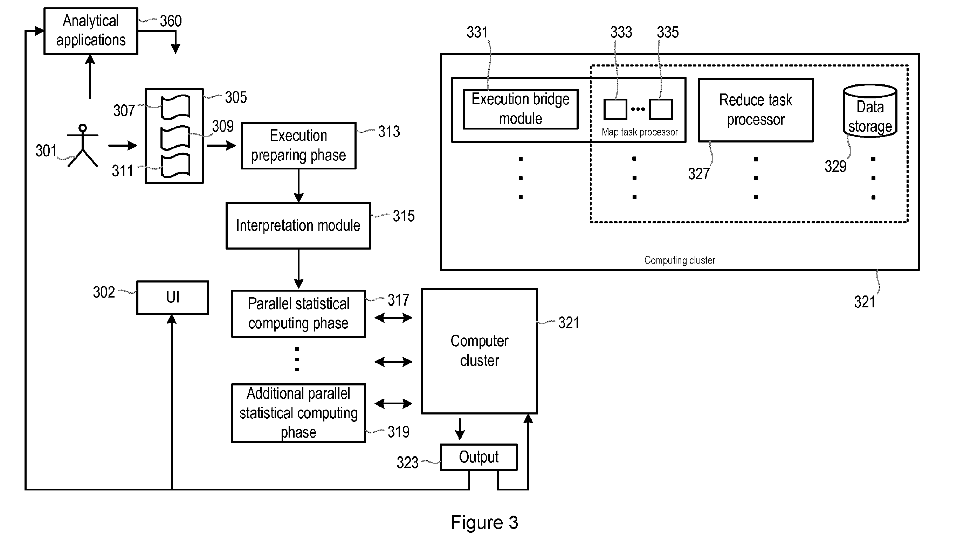

Figure 3 illustrates an embodiment of the system of figure 2 in more detail.

A combined script 305 is provided to execute at least one function to be performed in each processing stage. The combined script 305 comprises a data flow/query script 307, a bridge script 309 and a function computing script 311, for example a statistical function computing script 311. It is used to send tasks and manage tasks for parallel execution of the multiple processing nodes in the computer cluster 321 in each processing stage.

The function performed by a node or a plurality of node of any processing stage is defined by the function computing script 311 which provides parallel function computing for example parallel statistical computing. Although the embodiment is described with reference to statistical computing, it can be appreciated that other functions may be performed on the input data as defined by function script 311 within the combined script 305.

The analyst or developer 301 who may have knowledge of existing programming language for the function computing script 311, for example, knowledge of existing statistical language, is able to use the function computing script 311 that they are familiar with in a parallel function computing system. Hence, the analyst or developer 301 does not need to learn a new language for the parallel function computing utilising the system of the present invention.

The data flow/query script 307 may be a data flow/query script designed for large scale data management systems with parallel computing capability, for example Pig, which may be executed by all map (333-335) and reduce (327) task processors of the computer cluster 321 but lacks statistical functions required for advanced machine learning and data mining.

The function computing script 311 defines the statistical computing function. The function computing script 311 may be an existing script, for example, R which is executed in a statistical computing engine of the map processors (333-335) in the computing cluster 321.

The bridge script 309 provides the syntax to bridge the scripts 307 and 311 under the control of the bridging module 331. It may allow the analyst 301 to define and invoke the statistical function during the data flow/query processing resulting in the combined script 305.

The analyst or developer 301 may have knowledge of both data flow script 307 and function computing script 311. The syntax of bridge script 309 may be new to analyst/developer 301. A combined script editor may be provided to provide the analyst 301 the syntax highlight, content assistant, support etc.

The defined combined script 305 is prepared within an execution preparing phase 313. The script 305 is debugged, encoded etc within the interpretation module 315 (the interpretation module 201 of figure 2).

The under layer MapReduce execution model of a large scale data management system may be employed to guide and distribute the functions. For a statistical analysis job, one or many parallel statistical (function) computing phases 317, 319 (first and second processing stages 207, 211) maybe involved according the defined combined script 305.

The computing cluster 321 may contain a set of map task processors 333-335, a set reduce task processor 327, and a set of data/file storage 329. One or more function computing engines for the function computing script 311 (for example one or more statistical computing engines) may be contained in each map task processor 333-335 for one node. These engines of a map task process may have different configurations and versions, but only one engine may be executed for a particular function. Which engine will be executed for a task may be defined in the bridge script 309. All Map task processors 333-335 or reduce processors 327 may have the same configuration. This may allow hundreds or thousands of computer nodes in the cluster 321 to be deployed without the requirement of individual configuration, or they can be resulted from a single system clone image file or a hard disk clone of computer machine.

Each processor may be an individual computer machine. Several processors may be in one machine. These also may be implemented by several virtual processors machines in one physical machine. All machines are computer nodes are connected by WAN/LAN to have a computing cluster environment. Each machine may have RAM, hard disk, etc., which are not represented in the figures.

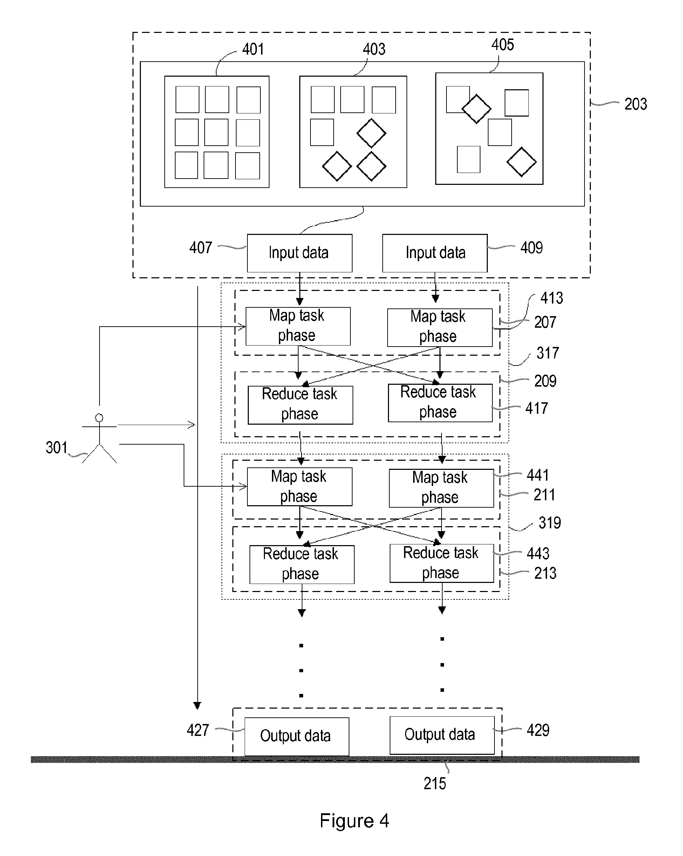

As illustrated in more detail in figure 4, the first processing stage 207 comprises a plurality of map task processors 333-335 to form a plurality of first map task phases 413. The output of the first processing stage 207 of each map task phase 413 is provided to an intermediate stage 209 which comprises a plurality of reduce task processors 327 which form a plurality of reduce task phases 417. The output of each first map task phase 413 is provided to each of the plurality of reduce task phases 417. These form the parallel function computing phase 317 of the computer cluster 321.

The output 323 of this computing phase 317 may provide the output of the complete analytical process 360 defined by the combined script 305, i.e. provided to the output stage 215 on the output terminal 219. This may include output to a user interface 302. In an alternative embodiment, an additional parallel computer phase 319 may be provided within the computer cluster 321 as defined by the statistical script 311. The additional parallel computer phase 319 comprises at least one second processing stage 211 with intermediate stages 209 therebetween until the final second processing stage 211 provides output 427, 429 of each reduce task phase 443 of the output stage 215.

In different applications, the input data received at the input stage 203 may be structured 401, semi structured 403, or unstructured data 405. As a response, the schema of data structure of input data is handled by the data flow/query script 305 at each processing stage to transform the input data into a format required by the process for that processing stage. The input data, at each processing stage, is divided into a plurality of data chunks 407, 409. Each chunk 407, 409 being processed according to the function of each map task phase 413 and each additional map task phase 441 (if utilised).

Each processing state is divided into a plurality of parallel map and reduce phases 413, 441 and, as mentioned above, there maybe a plurality of processing stages. The processing stages then leverage the MapReduce execution library and execution of the computing cluster.

The map task is executed in the map processor 333-335. The reduce task is executed in the reduce processor 327. The processing stages are within the map task phases 413,441.

The overall parallel processing stages are defined in the data flow/query script 307 by the analyst/developer 301. FOREACH statement of data flow/query language 307, such as in Pig, may be extended to allow invoking the functions such as statistical functions. The computing cluster 321 automatically distributes the functional tasks for available processing nodes in the computing cluster 321. Hence, the combined script language can design a new statistical computing script language that is inherently parallel.

The statistical functions are defined in statistical language as a map task.

A generic reduce function is provided by the system in the reduce task phases 417, 443 of intermediate stage 209 and the reduction stage 213 for aggregating data processed by map tasks 413, 441. This may in the form of a combiner for combining the outputs from various processing nodes. This does not require the analyst/developer 301 to define any specific reduce functions for any map tasks. There is no key-value paired map and reduce function needed to be developed by the analyst/developer 301, hence, it reduces the complexity of combined script 305.

All map tasks 413 may contain the same statistical functions within a parallel statistical computing phase 317. The same or different statistical functions may be contained in additional parallel statistical computing phases 319. This allows design complex analysis workflow involving several statistical computing phases.

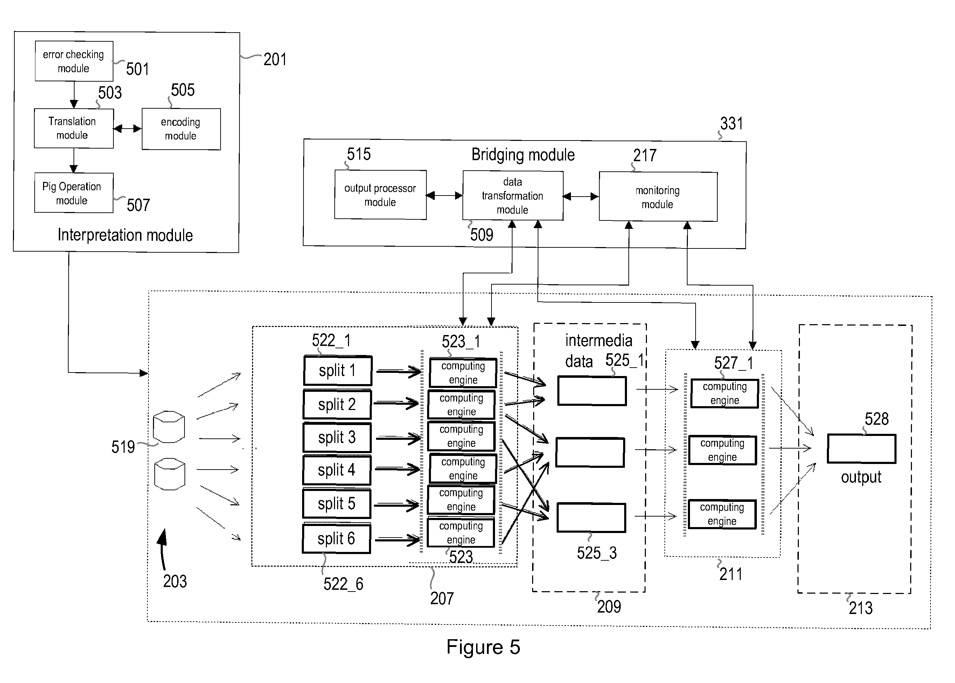

The interpretation module 201 and monitoring module 217 are shown in more detail in figure 5.

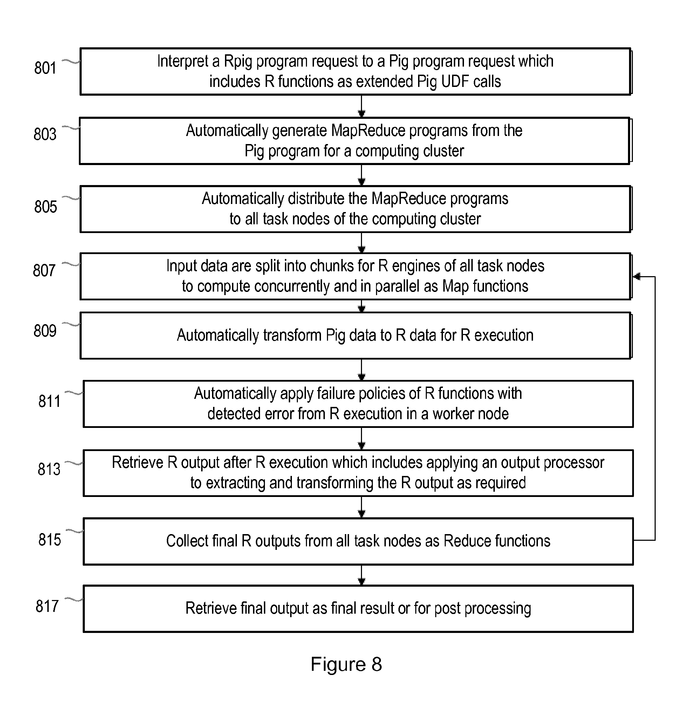

The interpretation module 201 dynamically interprets, 801 of Figure 8, the combined language script 305 into a standard data flow/query language script 307. In other words, the extended command/syntax and all statistical functions of the combined language will be converted into a standard data flow/query statements with standard commands. This enables extension of the large scale data management system for additional functions.

The interpretation module 201 comprises error checking module 501 a translation module 503, an encode module 505 and a flow/query operation module 507.

Any script syntax errors made by analyst/developer 301 will cause errors during the execution at a resource cost. Therefore, it is desirable to perform error checking before the map reduce jobs are deployed in the cluster. The error checking module 501 parses the combined language script syntaxes and detects any syntax errors of the script 305.

The encoded module 505 encodes, the statistical script 311 and the bridge script 309 as a data payload of a predefined extended data flow/query operation. The extended operation may be implemented by the monitoring module 217 by extending the data query/flow script 307 engine. For instance, with Pig, the extended operation is implemented using Pig UDF APIs (User Defined Function Application Programming Interfaces). As a result, the analyst/developer 301 does not require any knowledge of Pig UDF APIs, and does not require to write any low level Java programs.

The translation module 503 translates the statistical function invocation to standard data query statements of the data flow/query language. For instance a statement of the combined script 305,
A Pig statement in RPig script:

```
SV = FOREACH StatisticEvents_s GENERATE R.svm_sv(*);
```

Converted to standard Pig statements in Pig script:

```
SV = FOREACH StatisticEvents_s GENERATE *,
  '%7B%22rScript%22%3A%22rInputDf+%3Cdata.frame%28
   ...
  t%22%3A%22sv%22%2C%22id%22%3A%22svm_sv%22%7D';


SV = FOREACH SV GENERATE nmlab.RFunction(*);
```

The data flow/query operation module 507 invokes the translated flow/query scripts with defined parameters to start statistical parallel computing phases. The MapReduce programs are automatically generated, 803, and distributed, 805, to the processing nodes (map task processors 333-335 and reduce processors 327) of the processing stages.

The monitoring module 217 is included in a bridging module 331. The bridging module 331 automatically manages the statistical task execution in the computing clusters 321.

The bridging module 331 contains a data transformation module 509, an output processor module 512, and the monitoring module 217.

The data transformation module 509 is used for the necessary data exchange between data flow processing and statistical computing processing.

The analyst/developer 301 may require the output data of statistical computing in a different format or structure depending on the data flow. It is necessary and difficult for analyst/developer 301 to manually handle it at each step of process flow.

The output processor module 515 may be used for automatic statistical result post processing, before the next step of data flow processing.

Various faults, exceptions, can be caused by software or hardware during the statistical computing. With hundred or thousand statistical computing engines, it is very difficult to manage them manually in fault situations. The monitoring module 217 may be used to detect any statistical execution errors and apply any remedy strategy which may be defined in the bridge language 309 automatically. These faults, exceptions may caused by user defined analytic workflows (e.g. invalided input) or caused by system abnormal behaviors.

In operation, data is received on the input terminal 205 of the input stage 203. Although a single input terminal is illustrated in Figure 2, it can be appreciated that multiple input terminals may be provided allowing parallel read operations of the input data stored in a massive storage device 519 (as illustrated in Figure 5). The received input data may be temporally stored in a queue or buffer and then divided 103, 807 into a plurality of data chunks. The data chunks are provided on multiple outputs of the input stage 203 in a plurality of buffers 522_1 to 522_6. Although 6 buffers are illustrated in Figure 5, it can be appreciated that any number of buffers and outputs may be provided by the input stage 203. The functions defined by the function computing script 311 are performed concurrently 105, 909 by each processing node 523_1, 523_6 of a first processing stage 207 on the data chunks output by the input stage 203.

The data chunks are transformed, 809, by the data transformation module 509, into the format required for each processing stage.

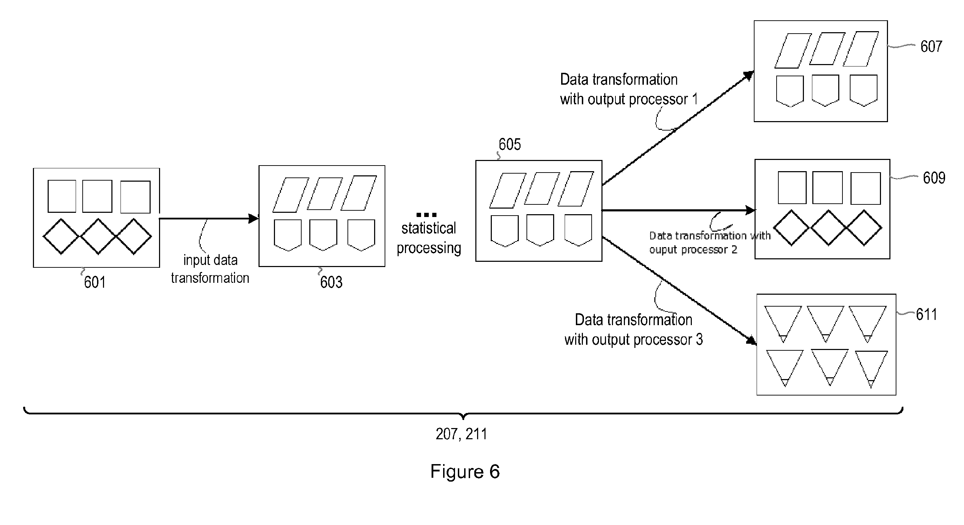

Figure 6 illustrates the data transformations of the data transformation module 509 of the data in each map task of each processing stage 207, 211.

Input data transformation maybe done by a set of defined rules from large scale data management system to statistical engines. For instance with Pig and R, the following rules may be used.

1. For Pig's scalar types, including *int, (long; float; double)*, *chararray* and *bytearray type's* are mapped to *integer, double, charachter,* and *raw* respectively as R's 'atomic' vectors.

2. For Pig's complex types, including *tuple, bag* and *map* are all mapped to *list* as R's 'generic' vectors.

Any form of input data, whether it is structure 401, semi-structured 403 or unstructured 405 is received on the input terminal 205 of the input stage 203. The data 601 is transformed to a required format 603. This is then processed within each computing engine 523 of each processing stage 207, 211, and transform to provide data 605 as input for each intermediate stage 209 or the reduction stage, 213.

The output data transformation of each from the processing stage may be performed by different output processors of the output processor module 515 of the output stage 215. For instance as illustrated, three different output processors maybe offered as RAW (output processor 1), PIG (output processor 2), XML (output processor 3), where unprocessed data raw data 607, PIG data 609, and XML (Extensible Markup Language) data 611. At any subsequent processing stage (if present) or the output stage 215, one of the multiple output format is selected as required. This gives flexibility of which data content and format. In particular it provides flexibility of which data content and format needed be returned through specifying an output processor for the output stage.

The transformed data for the final output can be selected and provided via the output terminal 219.

The combined script 305 inherits Pig program syntaxes as the program skeleton, but allows defining inline R programs within Pig programs. The R programs are as a set of R functions inside an RPig. An R function is defined as a tuple <Ri , Rc, Rs, Ro, op>.

1. Ri gives the identification of the R function.

2. Rc is defined as a tuple < p; t; f; d >, denotes a configuration of the R execution environment, where

(a) p denotes the executable paths of an R execution environment or engine.

(b) t specifies a maximum execution time in seconds of the R function. The R function execution will be halted and returns a null value to Pig when the timeout.

(c) f defines a failure policy for handling exceptions of the R function executions. E.g. RETRY_1 as default, retry at most once when an exception occurs; CONTINUE, ignore the exception and continue.

(d) d is a debug mode indicator. When it is true, data processed and progressing or the R function will be logged for debug purposes.

3. Rc represents an R script or statements defined in the R function. It also takes the *import('[R script path]')* command allowing to link an R script in a separated file (.r).

4. Ro specifies an R data object expected to be returned from the R function execution.

5. op is a tuple < t; s > specifies the post processor for output data of the R function before sending to Pig. t is one of three types of processors:

(a) RAW , the R object will be treated as bytearray raw data in Pig.

(b) PIG, it converts the output to a tuple or nested tuple data structure of Pig.

(c) XML, the R object will be converted to XML format.

s gives an additional script of the t needed. With case of XML, s is a XSLT (Extensible Stylesheet Language Transformations) script used for extracting and transforming from an XML based R object back to Pig. It also takes *import('[XSLT script path]')* command allowing to link a XSLT script in a separated file (.xsl).

JSON (JavaScript Object Notation) data format may be used for the bridge script 309 syntaxes in RPig programs. JSON is similar to XML, is a lightweight text-based human-readable data interchange format. As a result, a defined JSON schema in the following will be used as a solution to restrict and validate R program syntaxes of RPig programs. The JSON schema is a specification for defining data model for JSON-based  format data.

The following JSON schema may be used:

```
{
  "type":"object",
  "additionalProperties":false,
  "properties" : {
    "rConfig" : {
        "type":"object",
        "optional":true,
        "properties" : {
            "rExecutable" : { "type":"string", "optional":true },
            "rscriptExecutable" : { "type":"string", "optional":true },
            "duration" : { "type" : "integer","optional":true },
            "failurePolicy" : {"type" : "string", "optional":true,
              "enum" :
["RETRY_1","RETRY_5","RETRY_10","RETRY_FOREVER","CONTINUE"]},
            "debug" : {"type":"boolean", "optional":true}
        }
    },
    "rScript" : {"type":"string"},
    "rOutput" : {"type":"string"},
    "outputProcessor" : {
        "type" : "object",
        "properties" : {
            "script" : {"type":"string","optional":true},
            "type" : {
                "type" : "string","optional":true,"enum":["RAW","XML","PIG"]}
        }
    },
    "id" : {"type" : "string"}
  }
}
```

Each R function is annotated by "#R{...}EndR" annotations to separate with Pig statements within a RPig script. Defined R functions as Pig UDFs can be used with Pig statements for constructs, such as filtering, grouping, and per-tuple processing in data flows. RPig adds an extra command (R.) extending Pig commands for utilizing these defined R functions in Pig statements.

R. syntax: *R. r-function-id([pig-data-alias])*

The R function can be called in a Pig program with initial *R.* command following by the identifier of the R function. The Pig data (*pig-data-alias*) is needed to be processed in R can be specified as the input variable of the R function. The Pig data will be transformed into R data model from Pig data model and be sent to R framework really for execution automatically. Due to the difference between the data models of Pig and R, the data structure of Pig data will be changed to allow inputting to R. As a consequence, the RPig program covers both of data flow processing capabilities of Pig and statistical analysis capabilities of R.

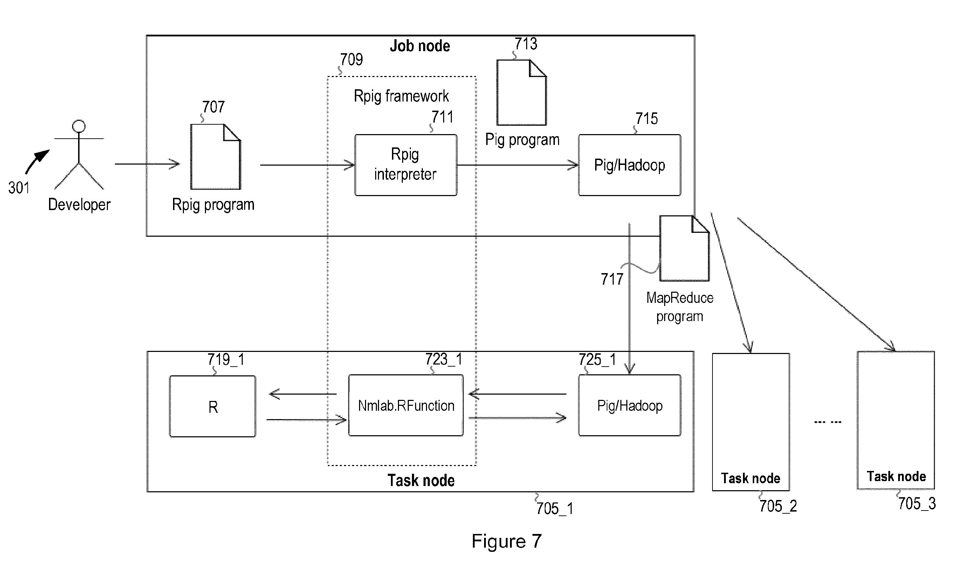

When a combined script such as a combination of R and Pig 707 is called, the interpretation module 201 dynamically interprets 711 the combined script 707 into a standard Pig script 713 of Figure 7 so it is able to use Pig to parallel the execution. In other words, the extended command and all R functions 719 of the combined script 707 will be converted into Pig statements 725 with standard commands. Therefore, the Pig framework can understand it to generate MapReduce functions 717 for parallel executions by a plurality of nodes 705_1, 705_2, 705_3.

The RPig interpreter 711 if the Rpig framework 709 converts all R functions 719 inside the RPig script 707 to UTF8 encoded R payloads, which is information Pig needs sent to the extended Pig function at a parallel execution stage. The reason for the encoding is to avoid the special characters in R functions and scripts violating the Pig statement syntax. The extended command for R function calls (R.*r-function-id(pig-data-alias)*) will be converted to a predefined extended Pig function or a Pig UDF call nmlab.RFunction 723 (*pig-data-alias* + *R-payload*). Since the RFunction implementing UDF API can only have one input parameter, the interpreter 711 will generate additional Pig statements to combine the pig-data-alias and the R-payload in a tuple as a single data variable 725. The R payload will be attached at the end of the Pig data for the input of the extended Pig function. The following example shows a statement of RPig and is converted to Pig statements with an R function call. The following example shows a statement of RPig and is converted to Pig statements with an R function call.

A Pig statement with R function call in RPig script:

*SV = FOREACH StatisticEvents_s GENERATE R.svm_sv(\*);*

Converted to standard Pig statements in Pig script:

*SV = FOREACH StatisticEvents_s GENERATE\*,*

*'%7B%22rScript%22%3A%22rInputDf+%3Cdata.frame%28...';*

*SV = FOREACH SV GENERATE nmlab.RFunction(\*);*

At the execution stage with task nodes 705_1 to 705_3 of a Hadoop cluster, the extended Pig function will be called by the Pig as it specified in the converted Pig program 713. The extend Pig function provide bridge between R and Pig. The main responsibilities of it are data transformation between Pig and R, and executing the R statements of user defined R scripts. It will firstly separate the R input data and R payload. Input data of R in Pig data model will be transformed into R data model automatically for R input (*rInput*), through executing a set of generated R statements by our framework. The transformation is based on the following defined rules.

For Pig's scalar types, including *int, (long; float; double), chararray* and bytearray type's are mapped to *integer, double, character,* and raw respectively as R's 'atomic' vectors.

For Pig's complex types, including *tuple, bag* and *map* are all mapped to *list* as R's 'generic' vectors.

With any nested data object in Pig, such as nested tuples, will be transformed to nested lists in R. Since different purposes of two languages or frameworks, there is no exact semantic matching between all data types in two data models. For example, *map<key, value>* type is hardly used in statistical computing, we convert it to a *list(key, value)* as an ordered collection in R. Within the R statement or script of an R function, users can still continually convert the rInput to other R data types by R commands, for example, converting a nested list to a data frame or a matrix.

The user defined R scripts from the decoded R payload will be executed follow by. After all R statements are executed 723_1 a result from R execution in R object will be retired, and will be applied with the output processor from the R payload for post processing. Final R result will be returned to the Pig program for continuing processes. Therefore, the users are offered the flexibility on deciding what data content and format needed be returned to Pig from a retrieved R object through specifying an output processor. The R object can be automatically converted back to Pig structures as one or nested data tuple by PIG processor. It also can be sent back to Pig as BYTEARRAY raw data, In this case, the R object data can be directly loaded in to R from Pig afterwards. For example, a trained SVM model can be loaded to R for value prediction in later. When a XML processor is used, the defined XSLT script with the processor is responsible for extracting and transforming output data of R before return to the Pig. The XML is used as an intermediate data format between two frameworks, R and Pig for data exchanging after R executions in this case. This gives users more flexibility on deciding what data content and format needed be returned to Pig through specifying a XSLT statement.

The outputs of each processing stage are aggregated 813, 815 to provide a reduced data set. This reduced data set may be provided as input to additional processing stage or to the output stage for transformation and output 817. In the processing stages, the R functions are as Map functions which are automatically generated by taking the advantage of the Pig framework. R functions will be as Map tasks which are expected parallel execution in different task nodes of Hadoop clusters.

Each R function will take a piece of split data working independently. Output data of R functions will be aggregated through Reduce tasks for post processing. Users do not need developing key-value paired map and reduce functions within RPig. They only need assign number of Map and Reduce tasks in parallel execution through Hadoop and Pig configuration.

An R function call will be executed as a completed separated process from other R functions. When an R function is completed and a result is returned, the data involved in the R function will be cleared and the process will be killed by the RPig framework. As a consequence, no R session will be kept alive after completion of R executions, and all data need to be saved or be persisted from R must through the Pig to HDFS. This design is because of an R session only existing in a single task node, which is replaceable by any other task node in a Hadoop cluster at anytime. The R session cannot be retrieved by other nodes in later. The Pig stores data including temporary data generated between MapReduce jobs during processing in HDFS to guarantee that data can be retrieved later from every node of the cluster.

Regarding with fault tolerant, the error handling is happened in two different layers, the node layer and the R engine layer. The underlay Hadoop framework provides failure model on nodes of the cluster. If a node failures during the execution of an analysis workflow, the Hadoop will restart the task of the failure node to an alternate node.

Within a node, the RPig framework uses failure policy to handle errors from an R engine execution 811. If an R execution failures during the execution of an R function, then a remedy action, such as retry once of the execution, defined in a failure policy of the R function will be applied. And the failure event will be logged by the RPig framework.

Since all R functions are mapped as Map tasks of Hadoop in RPig, the specified maximum execution time (t in Rc) for each R function is always expected less than the max timeout setting for Map tasks in Hadoop configurations. The R function will be killed when the Hadoop stops the map task which the R function belonged into.

In an example, SVM contains a set of powerful supervised machine learning algorithms used for classification and regression analysis. Interested unknown data can be predicted by a SVM model, which is resulted from training data after the training phase of a SVM algorithm. SVM is a complex statistical algorithm usually involving long computation time on a relatively small amount of data in training phase. A SVM based regression or SV regression algorithm is used in our second case scenario.

Increasing amount of phone calls is made by various VoIP (Voice over Internet Protocol) clients, rather than through traditional switched networks. One approach of monitoring the QoS of VoIP is using network KPI (Key Performance Indicator) at IP layer, such as packet lost, jitter, to estimate the MOS (Mean Opinion Score) value, which is a standard audio quality measurement parameter in telephony networks. Based on a set of labeled training data ((x1, y1), ..., (xn, yn)), A SV regression algorithm can build a relation function or a SVM model (y = f(x)) between a dependent variable and one or more independent variables, e.g., MOS (y) between packet lost (x) in this scenario. Since we need training SVM models for various VoIP applications with different VoIP codecs and in different networks, our implementation is expected to have parallelized SVM computation in a cluster to reduce the training time, where a single machine is failed to meet our performance requirement. RPig enables us to define and execute the SVM algorithms in MapReduce model for both SVM training and predicting phases. As a consequence, the performance becomes scalable with the cluster size. A scalable solution has the ability to improve the performance of algorithm for fast result delivery for customers' or products' demands. This is also especially important for many algorithms involved with real-time analytical processing in service assurance.

The following RPig code fragment shows a step on exacting support vectors in our SVM machine learning algorithm. In our overall training algorithm development, neither Java programs nor Map/Reduce functions are needed to be written.

RPig code fragment:

```
…
C = FOREACH B_p GENERATE R.svm_sv(*);
…
#R{
                "id":"svm_sv",
                "failurePolicy" : "RETRY_1",
                "rStatement":
                        "rInput_df <-data.frame(t(rep(NA,2)))
                        for(i in 1:length(rInput[[2]])){
                                rInput_df <- rbind(rInput_df,rInput[[2]][[i]])}
                        remove(rInput,i); rInput_df <- rInput_df[-1,]
                        library(e1071)
                        rInput_df <- rInput_df[complete.cases(rInput_df),]
                        # tune the paramaters
                        tuned <- tune.svm(X2 ~ ., data = rInput_df,
                                gamma = 10^(-2:0),kernel='radial')
```

```
                        svm_model <- svm(rInput_df[2], rInput_df[1], kernel='radial',
                                gamma=tuned$best.parameters$gamma, cross =
10)
                        SV <- rInput_df[c(svm_model$index),]",
                "rResult":
                        "SV",
                "xsltStatement":
                        "importXslt('svm_sv.xsl');"
}#EndR
```

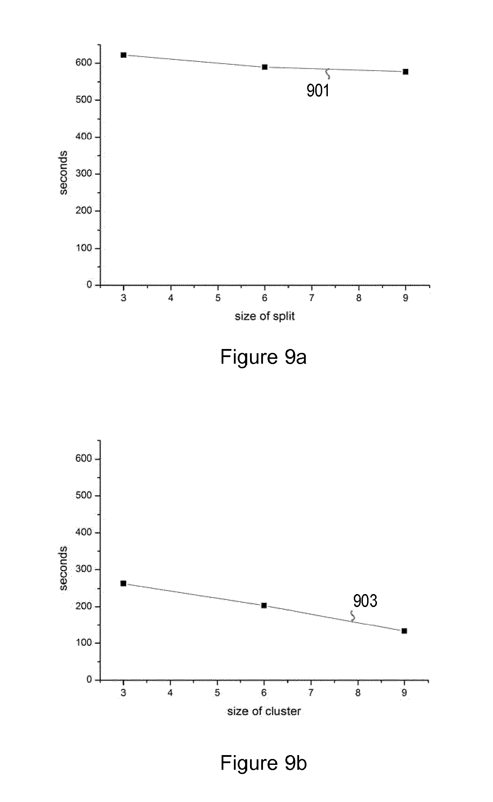

Figures 9a and 9b shows execution experiment result regarding scalability. In Figure 9a a standard R was executed in a SVM training algorithm. In Figure 9b, a system according to the embodiments was utilized. Figure 9a shows the time of standard R execution in a single computer or node. It takes around 10 minutes for training a model, and increasing number of splitting on data does not really help performance improvement on a single node. Figure 9b shows that, the training time is significantly decreased when we are able to automatically parallel the process by the system of the present invention with the MapReduce model. It only takes around 2 minutes with a cluster had 9 nodes. Further a linear scalability on the SVM training performance relating with the size of the cluster 903 is achieved compared with that of Figure 9a, 901.

The system of the present invention is primarily designed for developing and executing machine learning/data mining algorithms for data analysis for service assurance.

As mentioned earlier, although some solutions have proposed to scale traditional statistical software, such as R, limitations still exist. However, the system of the present invention addresses the problem by integrating traditional statistical software, R with scalable data management software, Pig to scale the statistical computing.

For each machine (processing node) in the cluster, the data received is transformed to data structure which can be processed in each processing stage. The result of the processing is transformed to data structure which can be executed in the cluster continually.

Each machine (processing node) in the cluster collects and aggregates the relevant data (output from above processing stage) from other machines. This is the reduce phase.

The bridging module can be implemented as a hardware module, but in alternative embodiments they can be implemented as software modules, finally a combined solution of hardware and software implementation is possible. If the execution bridge module is implemented as a software module it can be sent by the central control unit to a candidate machine for the cluster (i.e. before a machine joins the cluster or starting the workflow execution). Once received/downloaded by the candidate the software module is installed and turns the candidate into a regular cluster member.

The system of the present invention allows fast developing of machine learning and data mining statistical jobs and scalable execution of these jobs. It uses a concept that integrates a traditional statistical computing framework/engine and a parallel data processing framework to overcome the current problem on scalability of statistical computing. The R and Pig are example of software used in our case of proofing concept development. It results an RPig framework. The integrated framework itself automatically handles low level operations, such as the data transformations, tasks failures of analysis jobs in parallel executions.

In the present invention, the MapReduce jobs of R are automatically generated by leveraging the Pig framework. The users only need to define R functions of a single working node within RPig program; the execution of the R functions will be parallelized automatically based on Pig data flows.

It is a system and method of integration and automation to achieve scalable statistical computing, e.g. statistical computing, for advanced data analysis. It may be incorporated into the overall network management system. Network work data collected by current systems, such as (ENIQ Ericsson Network Intelligence Quotient) statistic, will be used as input data for data analysis. Machine learning/data mining algorithms will be applied by our component at data analysis stage. The result, such as service quality estimation, can be visualized in dashboard or be used in other continue processing.

Since the system of the present invention provides scalability on advanced data processing, it allows statistical algorithm implementations or R to be executed in a Hadoop cluster with MapReduce model by taking advantage of Pig. Both data storage and processing for data analysis is distributed and scalable.

The framework offers an integrated script language (RPig), which combines syntaxes of both R and Pig (Latin) scripts. It allows define parallel statistical analysis jobs in a single script for fast development and without needing to learn new languages or APIs.

The framework is able to parallel both R and Pig executions automatically. The necessary low level operations such as data transformation, fault tolerant are handled by the framework itself. Neither low level (Java) programs nor Map/Reduce functions are required to be written by developers. Algorithm developers can concentrate on the core data analysis algorithm design, rather than thinking of designing key-value based Map/Reduce functions.

The MapReduce jobs of R are automatically generated by leveraging the Pig framework. The users only need to define R functions of a single working node within RPig program; the execution of the R functions will be parallelized automatically based on Pig data flows. Elastic-R Chine, K., Open Science in the Cloud: Towards a Universal Platform for Scientific and Statistical Computing, in Handbook of Cloud Computing, B. Furht and A. Escalante, Editors. 2010, Springer. p. 453-474 platform allows users to start or stop the number of R engines hosted in Amazon EC2 instances in an R engine pool according the work load. Users can send and get data to any R engine in the engine pool through a central R console. This approach is more difficult to use, as users have to assign jobs for each R engine manually to parallel the data processing.

While the invention has been illustrated and described in detail in the drawings and foregoing description, such illustration and description are to be considered illustrative or exemplary and not restrictive; the invention is not limited to the disclosed embodiments.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1.  A method of operating a system for processing data, the system comprising a plurality of processing nodes, a selected plurality of the plurality of processing nodes performing at least one function, the method comprising the step of:

    (a) dividing input data into a plurality of data chunks;
    (b) processing each of the plurality of data chunks, concurrently, according to one of the at least one function;
    (c) aggregating the processed data chunks into a data set.

2.  A method according to claim 1, wherein the data set comprises a plurality of intermediate data chunks and the method further comprises

    (d) dividing the aggregated data set into a plurality of intermediate data chunks
    (e) processing each of the plurality of intermediate data chunks, concurrently, according to a additional one of the at least one function; and
    (f) aggregating the processed intermediate data chunks into an additional data set.

3.  A method according to claim 2, wherein the steps (d) to (f) are repeatable.

4.  A method according to claim 1 or 2, wherein the method further comprises:

    transforming the aggregated data set into at least one of a plurality of different data formats;
    outputting the final transformed, aggregated data set.

5.  A method according to any one of the preceding claims, wherein the method further comprises:

    transforming the input data chunks into a format required for processing each of the plurality of data chunks according to the at least one function.

6.  A method according to any one of the preceding claims, wherein the step of aggregating the processed data chunks into a data set comprises:

    combining at least two outputs of step (b) and/or step (d) to a single output data, the data set comprises at least one single output data of the combination.

7.  A method according to any one of the preceding claims, wherein the method further comprises the step of monitoring the operation of each of the plurality of processing nodes.

8.  A method according to any one of the preceding claims, wherein the at least one of the function comprises one of statistical analysis or machine learning.

9.  A system for processing data, the system comprising a plurality of processing nodes, a selected plurality of the plurality of processing nodes performing at least one function, the system further comprising:

    a processing stage for dividing input data into a plurality of data chunks
    and processing each of the plurality of data chunks, concurrently, according to one of the at least one function;
    a reduction stage for aggregating the processed data chunks into a data set.

10. A system according to claim 9, wherein the system further comprises
    at least one intermediate stage, after the processing stage, for aggregating the processed data chunks into a data set ; and
    at least one second processing stage for dividing the aggregated data set into a plurality of intermediate data chunks and processing each of the plurality of intermediate data chunks, concurrently, according to an additional one of the at least one function.

11. A system according to claim 9 or 10, wherein the system further comprises:

a data transformation module for transforming the aggregated data set of the reduction stage and/or the at least one intermediate stage into at least one of a plurality of different data formats and outputting the final transformed aggregated data set.

12. A system according to any one of claims 9 to 11, wherein the system further comprises:

an interpretation module for assigning at least one function to the selected plurality of processing nodes of each processing stage.

13. A system according to claim 10, wherein the reduction stage and each of at least one intermediate stage comprises:

at least one combiner for combining at least two outputs of the processing stage to a single output data.

14. A system according to any one of claims 9 to 13, wherein the system further comprises:

a monitoring module for monitoring the operation of each of the plurality of processing nodes.

15. A system according to any one of claims 9 to 14, wherein the plurality of processing nodes form a Hadoop cluster and the at least one function is based on a MapReduce model.

16. A system according to any one claims 9 to 15, wherein the at least one of the function comprises one of statistical analysis or machine learning.

Figure 1

Figure 2

Figure 3

Figure 4

Figure 5

Figure 6

Figure 7

**Job node** 709

Rpig framework 711 — Rpig interpreter

713 — Pig program

715 — Pig/Hadoop

717 — MapReduce program

707 — Rpig program

301 — Developer

**Task node** 705_1

719_1 — R

723_1 — Nmlab.RFunction

725_1 — Pig/Hadoop

Task node 705_2

Task node 705_3

801 — Interpret a Rpig program request to a Pig program request which includes R functions as extended Pig UDF calls

803 — Automatically generate MapReduce programs from the Pig program for a computing cluster

805 — Automatically distribute the MapReduce programs to all task nodes of the computing cluster

807 — Input data are split into chunks for R engines of all task nodes to compute concurrently and in parallel as Map functions

809 — Automatically transform Pig data to R data for R execution

811 — Automatically apply failure policies of R functions with detected error from R execution in a worker node

813 — Retrieve R output after R execution which includes applying an output processor to extracting and transforming the R output as required

815 — Collect final R outputs from all task nodes as Reduce functions

817 — Retrieve final output as final result or for post processing

Figure 8

Figure 9a

Figure 9b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. DEAN ; S. GHEMAWAT.** Mapreduce: Simplified data processing on large clusters. *Communications of the ACM,* 2008, vol. 51 (1), 107-113
- Open Science in the Cloud: Towards a Universal Platform for Scientific and Statistical Computing. **CHINE, K.** Handbook of Cloud Computing. Springer, 2010, 453-474
- Ricardo: Integrating R and Hadoop. **DAS, S. et al.** ACM SIGMOD International conference on Management of data. 2010
- **RICKERT, J.** Big Data Analysis with Revolution R Enterprise (white paper). *Revolution Analytics,* 2011
- **GUHA, S.** Computing environment for the statistical analysis of large and complex data. *PhD thesis,* 2010
- **REVOSCALER ; RICKERT, J.** Big Data Analysis with Revolution R Enterprise (white paper). *Revolution Analytics*
- **RICARDO DAS, S. et al.** Ricardo: Integrating R and Hadoop. *ACM SIGMOD International conference on Management of data,* 2010
- **RHIPE ; RHADOOP GUHA, S.** Computing environment for the statistical analysis of large and complex data. *PhD thesis,* 2010
- Open science in the cloud: Towards a universal platform for scientific and statistical computing. **ELASTIC-R K. CHINE.** Hand-book of Cloud Computing. Springer, 2010, 453-474
- Open Science in the Cloud: Towards a Universal Platform for Scientific and Statistical Computing. **ELASTIC-R CHINE, K.** Handbook of Cloud Computing. Springer, 2010, 453-474